# EUROPEAN PATENT APPLICATION

(11) **EP 4 613 375 A1**
(43) Date of publication of application: **10.09.2025**
(21) Application number: 23906325.8
(22) Date of filing: 28.06.2023
(51) Int. Cl.: B01J 29/83, B01D 53/94, B01J 29/80, B01J 35/56

(54) **EXHAUST GAS PURIFYING CATALYST**

(30) Priority: 23.12.2022 JP 2022206103
(71) Applicant: CATALER CORPORATION, Kakegawa-shi, Shizuoka 437-1492 (JP)
(72) Inventor: KAWAKAMI, Yuki, Kakegawa-shi, Shizuoka 437-1492 (JP); SUGIOKA, Daisuke, Kakegawa-shi, Shizuoka 437-1492 (JP); CHIBA, Akiya, Kakegawa-shi, Shizuoka 437-1492 (JP); OGAWA, Ryoichi, Kakegawa-shi, Shizuoka 437-1492 (JP)
(74) Representative: Kramer Barske Schmidtchen Patentanwälte PartG mbB
(86) International application number: PCT/JP2023/023957
(87) International publication number: WO 2024/134939

(57) **Abstract**

Provided is an exhaust gas purifying catalyst showing high HC purification performance at cold start after hydrothermal endurance. An exhaust gas purifying catalyst includes a base material, a hydrocarbon adsorption layer, and a catalyst layer. The hydrocarbon adsorption layer and the catalyst layer are stacked such that the hydrocarbon adsorption layer is located closer to the base material than the catalyst layer is. The catalyst layer contains a catalytic metal. The hydrocarbon adsorption layer includes a molecular sieve containing substantially no Si from one end to another end of the hydrocarbon adsorption layer along a flow direction of an exhaust gas. A content of the molecular sieve containing substantially no Si in the hydrocarbon adsorption layer is 80 mass% or more. The molecular sieve containing substantially no Si is an aluminophosphate molecular sieve having a 12-numbered ring.

## Description

### [Technical Field]

The present invention relates to an exhaust gas purifying catalyst. This application claims the benefit of priority to Japanese Patent Application No. 2022-206103 filed on December 23, 2022. The entire contents of this application are hereby incorporated herein by reference.

### [Background Art]

An exhaust gas emitted from an internal combustion engine such as an automobile engine contains harmful components such as hydrocarbon (HC), carbon monoxide (CO), and nitrogen oxide (NOx). To cause efficient reaction and removal of these harmful components from the exhaust gas, exhaust gas purifying catalysts have been employed to date. In a typical structure of the exhaust gas purifying catalysts, a catalyst layer including a catalytic metal such as platinum (Pt), palladium (Pd), or rhodium (Rh) is formed on a base material having high heat resistance such as ceramic.

In a state where an exhaust gas purifying catalyst is not sufficiently heated (so-called cold start) immediately after start of an engine, it is difficult to obtain catalyst activity sufficient for a treatment of hydrocarbon (HC) because of low temperature of the exhaust gas purifying catalyst. Therefore, an HC adsorption type exhaust gas purifying catalyst in which a catalyst layer including a catalytic metal is laminated on an HC adsorption layer containing an HC adsorbent has been developed (see, for example, Patent Documents 1 through 4). As an HC adsorbent, a molecular sieve such as zeolite is known as described in Patent Documents 1 through 4.

### [Citation List]

### [Patent Document]

[Patent Document 1] Japanese Patent Application Publication No. H07-256114
[Patent Document 2] Japanese Patent Application Publication No. 2009-167973
[Patent Document 3] Japanese Patent Application Publication No. 2004-116331
[Patent Document 4] Japanese Translation of PCT International Application Publication No. 2020-510519

### [Summary of Invention]

### [Technical Problem]

In recent years, with further strengthening of exhaust gas regulations, exhaust gas purifying catalysts are required to have higher performance for removing harmful components contained in exhaust gas. For example, higher exhaust gas purification performance at cold start is required. Through an intensive study, inventors of the present invention found that the exhaust gas purifying catalysts of the above-mentioned prior art have a problem that HC purification performance at cold start significantly deteriorates after long-term exposure to high-temperature exhaust gas containing water (hereinafter referred to as "after hydrothermal endurance").

It is therefore an object of the present invention to provide an exhaust gas purifying catalyst exhibiting high HC purification performance at cold start after hydrothermal endurance.

### [Solution to Problem]

Through an intensive study, the inventors of the present invention found that a cause of the significant deterioration of purification performance after hydrothermal endurance in the above-mentioned conventional exhaust gas purifying catalysts using zeolite is that Si contained in zeolite (aluminosilicate salt) migrates during hydrothermal endurance to harmfully affect a precious metal that is a catalytic metal. The inventors also found that the HC purification performance of an exhaust gas purifying catalyst at cold start after hydrothermal endurance is rapidly enhanced by using a predetermined proportion or more of a molecular sieve containing substantially no Si as an HC adsorbent. Through further intensive study, the inventors found that the use of an aluminophosphate molecular sieve having a 12-membered ring among molecular sieves containing substantially no Si significantly enhances HC purification performance of an exhaust gas purifying catalyst at cold start after hydrothermal endurance.

That is, an exhaust gas purifying catalyst [1] disclosed here includes a base material, a hydrocarbon adsorption layer, and a catalyst layer. The hydrocarbon adsorption layer and the catalyst layer are stacked such that the hydrocarbon adsorption layer is located closer to the base material than the catalyst layer is. The catalyst layer contains a catalytic metal. The hydrocarbon adsorption layer includes a molecular sieve containing substantially no Si from one end to another end of the hydrocarbon adsorption layer along a flow direction of an exhaust gas. A content of the molecular sieve containing substantially no Si in the hydrocarbon adsorption layer is 80 mass% or more. The molecular sieve containing substantially no Si is an aluminophosphate molecular sieve having a 12-numbered ring. This configuration can provide an exhaust gas purifying catalyst exhibiting high HC purification performance at cold start after hydrothermal endurance.

In an exhaust gas purifying catalyst [2] disclosed here, in the exhaust gas purifying catalyst [1], the hydrocarbon adsorbent includes 90 mass% or more of the molecular sieve containing substantially no Si. This configuration can provide an exhaust gas purifying catalyst exhibiting higher HC purification performance at cold start after hydrothermal endurance.

In an exhaust gas purifying catalyst [3] disclosed here, in the exhaust gas purifying catalyst [1] or [2], a framework structure of the aluminophosphate molecular sieve is AFI type. This configuration is advantageous for HC purification performance at cold start after hydrothermal endurance.

In an exhaust gas purifying catalyst [4] disclosed here, in any one of the exhaust gas purifying catalysts [1] to [3], a coating width of the hydrocarbon adsorption layer along the flow direction of the exhaust gas is 80% or more of an overall length of the base material. This configuration enhances HC purification performance.

In an exhaust gas purifying catalyst [5] disclosed here, in any one of the exhaust gas purifying catalysts [1] to [4], a first partial catalyst layer and a second partial catalyst layer are stacked in the catalyst layer. The first partial catalyst layer is located closer to the base material than the second partial catalyst layer is. Each of the first partial catalyst layer and the second partial catalyst layer contains the catalytic metal. The first partial catalyst layer includes an oxidation catalyst as the catalytic metal. The second partial catalyst layer includes a reduction catalyst as the catalytic metal. This configuration can provide an exhaust gas purifying catalyst exhibiting especially high exhaust gas purification performance.

### [Brief Description of Drawings]

[FIG. 1] A schematic view illustrating an exhaust gas purification system according to a first embodiment.
[FIG. 2] A perspective view schematically illustrating the exhaust gas purifying catalyst in FIG. 1.
[FIG. 3] A partial cross-sectional view of the exhaust gas purifying catalyst in FIG. 1 taken along a cylinder axis direction.
[FIG. 4] A partial cross-sectional view illustrating a configuration of a variation of the exhaust gas purifying catalyst in FIG. 1.
[FIG. 5] A graph showing HC 50% purification temperatures after hydrothermal endurance treatments in Examples 1 through 4 and Comparative Examples 1 through 5.
[FIG. 6] A graph showing HC emission amounts after hydrothermal endurance treatments in Example 5 and Comparative Example 6.

### [Description of Embodiments]

### [First Embodiment]

A preferred embodiment of the present invention will be described hereinafter with reference to the drawings. Matters not specifically mentioned in the description but required for carrying out the present invention can be understood as matters of design of a person skilled in the art based on related art in the field. The present invention can be carried out on the basis of the contents disclosed in the description and common general knowledge in the field. In the drawings, members and parts having the same functions are denoted by the same reference characters, and description will not be repeated or will be simplified. Dimensional relationships (e.g., length, width, and thickness) in the drawings do not necessarily reflect actual dimensional relationships. The expression "A to B" (where A and B are any numerical values) representing a range herein includes "preferably greater than A" and "preferably less than B" as well as "A or more and B or less."

### <<Exhaust Gas Purification System>>

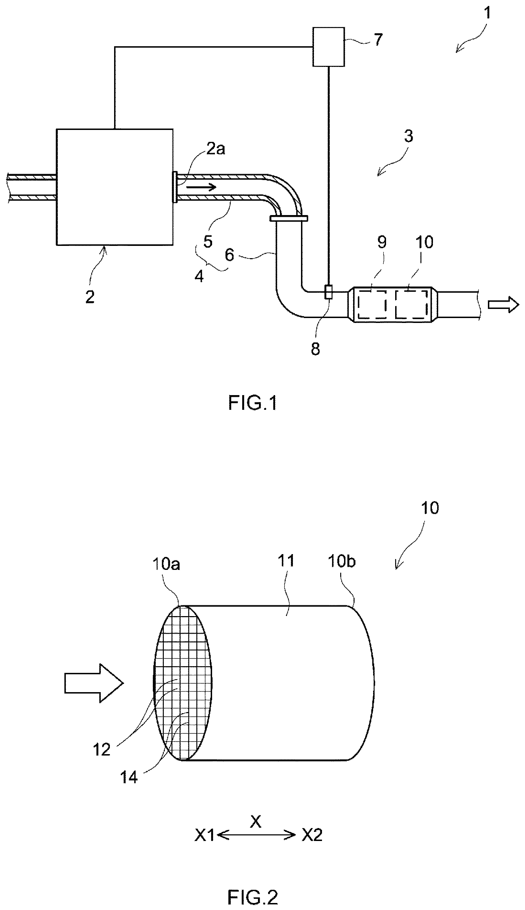

FIG. 1 is a schematic view of an exhaust gas purification system 1. The exhaust gas purification system 1 includes an internal combustion engine (engine) 2, an exhaust gas purification device 3, and an engine control unit (ECU) 7. The exhaust gas purification system 1 is configured to purify harmful components, such as HC, CO, and NOx, included in an exhaust gas emitted from the internal combustion engine 2 by the exhaust gas purification device 3. Arrows in FIG. 1 indicate a flow direction of an exhaust gas. In the following description, a side near the internal combustion engine 2 along the flow of the exhaust gas will be referred to as an upstream side, and a side away from the internal combustion engine 2 will be referred to as a downstream side.

The internal combustion engine 2 herein is mainly constituted by a gasoline engine of a gasoline vehicle. The internal combustion engine 2 may be an engine other than a gasoline engine, for example, an engine mounted on a diesel engine or a hybrid vehicle. The internal combustion engine 2 includes a combustion chamber (not shown). The combustion chamber is connected to a fuel tank (not shown). The fuel tank herein stores gasoline in this embodiment. Fuel stored in the fuel tank may be a diesel fuel (gas oil), for example. In the combustion chamber, fuel supplied from the fuel tank is mixed with oxygen and is burnt. Accordingly, combustion energy is converted to mechanical energy. The combustion chamber communicates with an exhaust port 2a. The exhaust port 2a communicates with the exhaust gas purification device 3. The burnt fuel gas is emitted to the exhaust gas purification device 3 as an exhaust gas.

The exhaust gas purification device 3 includes an exhaust passage 4 communicating with the internal combustion engine 2, a pressure sensor 8, a first catalyst 9, and a second catalyst 10. The exhaust passage 4 is an exhaust gas passage in which an exhaust gas flows. The exhaust passage 4 herein includes an exhaust manifold 5 and an exhaust pipe 6 in this embodiment. The upstream end of the exhaust manifold 5 is coupled to the exhaust port 2a of the internal combustion engine 2. The downstream end of the exhaust manifold 5 is coupled to the exhaust pipe 6. The first catalyst 9 and the second catalyst 10 are disposed in this order from the upstream side in an intermediate portion of the exhaust pipe 6. The positions of the first catalyst 9 and the second catalyst 10 may be changed in any manner. The numbers of the first catalyst 9 and the second catalyst 10 are not particularly limited, and a plurality of first catalysts 9 and a plurality of second catalysts 10 may be provided. A third catalyst may also be provided downstream of the second catalyst 10.

The first catalyst 9 may be the same as or similar to a conventional catalyst and is not particularly limited. Examples of the first catalyst 9 include: a diesel particulate filter (DPF) that removes PM included in an exhaust gas; a diesel oxidation catalyst (DOC) that purifies HC and CO included in an exhaust gas; a three-way catalyst that purifies HC, CO, and NOx included in an exhaust gas at the same time; and an NOx storage-reduction (NSR) catalyst that stores NOx in the normal driving (in a lean condition) and purifies NOx using HC or CO as a reducing agent when more fuel is injected (in a rich atmosphere). The first catalyst 9 may have the function of increasing the temperature of an exhaust gas that is to flow into the second catalyst 10, for example. It should be noted that the first catalyst 9 is not an essential component, and may be omitted in other embodiments.

The second catalyst 10 has the function of purifying harmful components (e.g., HC) in an exhaust gas. The second catalyst 10 herein is a three-way catalyst in this embodiment. The second catalyst 10 is an example of an exhaust gas purifying catalyst disclosed here. It should be noted that the second catalyst 10 will also be referred to as an "exhaust gas purifying catalyst" hereinafter. A configuration of the second catalyst (exhaust gas purifying catalyst) 10 will be described in detail later.

The ECU 7 controls the internal combustion engine 2 and the exhaust gas purification device 3. The ECU 7 is electrically connected to the internal combustion engine 2 and sensors (e.g., the pressure sensor 8, a temperature sensor, and an oxygen sensor) disposed in each portion of the exhaust gas purification device 3. A configuration of the ECU 7 may be the same as or similar to a conventional configuration, and is not particularly limited. The ECU 7 is a processor or an integrated circuit, for example. The ECU 7 includes an input port (not shown) and an output port (not shown). The ECU 7 receives, for example, information such as an operating state of a vehicle and the amount, temperature, and pressure of an exhaust gas emitted from the internal combustion engine 2. The ECU 7 receives information detected by sensors (e.g., pressure measured by the pressure sensor 8) through the input port. Based on the received information, for example, the ECU 7 transmits a control signal through the output port. The ECU 7 controls operations such as fuel injection control, ignition control, and intake air amount adjustment control of the internal combustion engine 2, for example. Based on the operating state of the internal combustion engine 2 and the amount of an exhaust gas from the internal combustion engine 2, and the like, the ECU 7 controls driving and stop of the exhaust gas purification device 3.

### <<Exhaust Gas Purifying Catalyst>>

FIG. 2 is a perspective view schematically illustrating the exhaust gas purifying catalyst 10. It should be noted that the arrow in FIG. 2 indicates a flow direction of an exhaust gas. In FIG. 2, the upstream side of the exhaust passage 4 relatively close to the internal combustion engine 2 is shown at the left, and the downstream side of the exhaust passage relatively far from the internal combustion engine 2 is shown at the right. In FIG. 2, character X denotes cylinder axis directions of the exhaust gas purifying catalyst 10. The exhaust gas purifying catalyst 10 is disposed in the exhaust passage 4 such that the cylinder axis directions X extend along a flow direction of an exhaust gas. The cylinder axis directions X are along the flow direction of the exhaust gas. In the following description, one direction X1 of the cylinder axis directions X will also be hereinafter referred to as a direction toward the upstream side (also referred to as an exhaust gas inflow side or a front side), and the other direction X2 of the cylinder axis directions X will also be hereinafter referred to as a direction toward the downstream side (also referred to as an exhaust gas outflow side or a rear side). It should be noted that these directions are defined merely for convenience of description, and do not limit to the state of installation of the exhaust gas purifying catalyst 10.

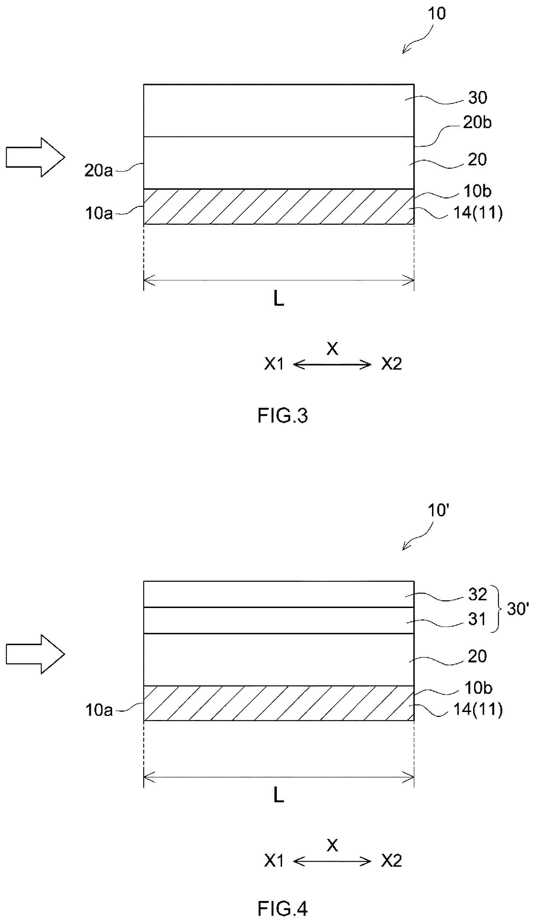

As illustrated in FIG. 3, the exhaust gas purifying catalyst 10 includes a base material 11 having a straight flow structure, a hydrocarbon (HC) adsorption layer 20, and a catalyst layer 30. An end of the exhaust gas purifying catalyst 10 in the direction X1 is an inlet 10a of an exhaust gas, and the other end in the direction X2 is an outlet 10b of the exhaust gas. The exhaust gas purifying catalyst 10 has a cylindrical outer shape in this embodiment. The outer shape of the exhaust gas purifying catalyst 10 is not particularly limited, and may be, for example, an oval cylindrical shape, a polygon cylindrical shape, a pipe shape, a foam shape, a pellet shape, or a fiber shape.

The base material 11 constitutes a frame of the exhaust gas purifying catalyst 10. The base material 11 is not particularly limited, and may be any material and mode conventionally used for this type of application. The base material 11 may be, for example, a ceramic substrate composed of ceramics such as cordierite, aluminum titanate, or silicon carbide, or may be a metal substrate composed of stainless steel (SUS), a Fe-Cr-Al-based alloy, or a Ni-Cr-Al-based alloy. As illustrated in FIG. 2, the base material 11 has a honeycomb structure in this embodiment. The base material 11 includes a plurality of cells (cavities) 12 regularly arranged along the cylinder axis directions X, and partitions (ribs) 14 partitioning the plurality of cells 12. The volume of the base material 11 (apparent volume including the volume of the cells 12) may be, but is not limited to, approximately 0.1 to 10 L, and 0.5 to 5 L, for example. The average length (overall length) L of the base material 11 along the cylinder axis directions X may be approximately 10 to 500 mm, and 50 to 300 mm, for example.

The cells 12 serve as channels of an exhaust gas. The cells 12 extend along the cylinder axis directions X. The cells 12 are through holes penetrating the base material 11 along the cylinder axis directions X. The shape, size, number, for example, of the cells 12 may be designed in consideration of, for example, the flow rate and components of an exhaust gas flowing in the exhaust gas purifying catalyst 10. The shape of a cross section of the cells 12 orthogonal to the cylinder axis directions X is not particularly limited. Examples of the cross-sectional shape of each cell 12 include quadrangles such as squares, parallelograms, rectangles, and trapezoids, other polygons (e.g., triangles, hexagons, and octagons), and various geometric shapes such as waveforms and circles. The partitions 14 face the cells 12 and partition adjacent cells 12. The average thickness (dimension orthogonal to the surface, the same hereinafter) of the partitions 14 may be, but is not limited to, approximately 0.1 to 10 mil (where 1 mil is about 25.4 µm), and 0.2 to 5 mil, for example, from the viewpoints of increasing mechanical strength and reducing a pressure loss, for example. The partitions 14 may be porous to allow an exhaust gas to pass therethrough.

FIG. 3 is a partial cross-sectional view schematically illustrating a portion of a cross section of the exhaust gas purifying catalyst 10 taken along the cylinder axis directions X. As illustrated in FIG. 3, the HC adsorption layer 20 and the catalyst layer 30 are stacked on the base material 11. The HC adsorption layer 20 is located closer to the base material 11 (i.e., lower layer side) than the catalyst layer 30. This arrangement can efficiently remove HC adsorbed by the HC adsorption layer 20, by making use of the catalyst layer 30.

The HC adsorption layer 20 includes, as an HC adsorbent, a molecular sieve substantially containing no Si. A region including a molecular sieve containing substantially no Si extends from one end 20a to the other end 20b of the HC adsorption layer 20. Typically, the entire HC adsorption layer 20 includes a molecular sieve containing substantially no Si. The presence of the HC adsorption layer 20 including the HC adsorbent can increase the amount of the HC adsorbent and enhance HC purification performance, as compared to the case of mixing an HC adsorbent in a catalyst layer.

The expression "a molecular sieve includes substantially no Si" herein means that a proportion of Si atoms to all the atoms constituting a molecular sieve is 6 atom% or less (preferably 3 atom% or less, more preferably 1 atom% or less, even more preferably 0 atom%). Thus, for example, Si is allowed to be contained in a molecular sieve by movement of Si, inevitable impurities, and other reasons. It should be noted that a proportion of Si atoms to all the atoms constituting a molecular sieve can be determined by X-ray fluorescence analysis (XRF).

In this embodiment, as a molecular sieve containing substantially no Si, an aluminophosphate (ALPO) molecular sieve having a 12-numbered ring is used. The ALPO molecular sieve can be aluminophosphate (AlPO₄) having a framework structure that is the same as, similar to, or different from that of zeolite. The ALPO molecular sieve contains substantially no Si, and a SiO₂/Al₂O₃ ratio (mole ratio) of the ALPO molecular sieve is less than 1, more preferably 0.5 or less, even more preferably 0.1 or less, most preferably zero. The ALPO molecular sieve used here contains substantially no Si, and thus, are different from aluminophosphate-based zeolite with an increased content of Al₂O₃ relative to SiO₂ (where even low silica zeolite has a SiO₂/Al₂O₃ ratio of generally 1 or more). It should be noted that the SiO₂/Al₂O₃ ratio can be determined by X-ray fluorescence analysis (XRF).

The framework structure of the ALPO molecular sieve used is not particularly limited as long as the ALPO molecular sieve has a 12-numbered ring. Examples of the framework structure having a 12-numbered ring include AFI, AFR, ATO, ATS, EZT, OSI, SAF, and SFO as a framework code defined by International Zeolite Association (IZA). The maximum number of ring members of an ALPO molecular sieve having a 12-numbered ring is typically 12.

In this embodiment, the HC adsorbent included in the HC adsorption layer 20 includes 80 mass% or more of an ALPO molecular sieve having a 12-numbered ring. That is, a mass proportion of an ALPO molecular sieve having a 12-numbered ring in the total mass of the HC adsorbent included in the HC adsorption layer 20 is 80 mass% or more.

In conventional techniques, a molecular sieve such as zeolite is used as an HC adsorbent. Zeolite is a crystalline aluminosilicate serving as a molecular sieve, and thus, contains Si and Al. The findings obtained by the study of the inventors show that when a hydrothermal endurance treatment is performed on a catalyst layer including zeolite, Si contained in zeolite moves to harmfully affect a precious metal that is a catalytic metal, which degrades exhaust gas purification performance at cold start. This is considered to be because SiO₂ contained in zeolite is reduced to SiO in a high-temperature reduction atmosphere, and interfacial motion and evaporation in the form of SiOx occur. It is also considered to be because of poisoning by interaction between Si and the precious metal.

In view of this, in this embodiment, 80 mass% or more of a molecular sieve containing substantially no Si are included as the HC adsorbent, so that HC purification performance at cold start can be thereby enhanced even after hydrothermal endurance.

It is also known that an ALPO molecular sieve can be used as an HC adsorbent. In this embodiment, as the ALPO molecular sieve, an ALPO molecular sieve having a 12-numbered ring is used. Since the framework structure of the ALPO molecular sieve has a 12-numbered ring, HC can be efficiently adsorbed, and HC purification performance after hydrothermal endurance is significantly enhanced.

On the other hand, exhaust gas regulations have been increasingly strengthened in recent years, and there is a growing demand for reducing NH₃ emissions from gasoline engine vehicles. An ALPO molecular sieve having a 12-numbered ring can also function as a NH₃ adsorbent. Thus, the exhaust gas purifying catalyst 10 according to this embodiment can purify NH₃ in an exhaust gas highly efficiently, and have high NH₃ purification performance even after hydrothermal endurance.

Since the HC purification performance at cold start after hydrothermal endurance are further enhanced, the content of a molecular sieve containing substantially no Si included in the HC adsorbent in the HC adsorption layer 20 is preferably 90 mass% or more, more preferably 95 mass% or more, even more preferably 97 mass% or more, most preferably 100 mass%.

In a case where the HC adsorbent include 80 mass% or more and less than 100 mass% of a molecular sieve containing substantially no Si, the HC adsorbent includes adsorbent other than an ALPO molecular sieve having a 12-numbered ring (hereinafter referred to as "another or the other HC adsorbent"). The other HC adsorbent may be zeolite or an ALPO molecular sieve having no 12-numbered ring, for example. The other HC adsorbent may be a known adsorbent used as an HC adsorbent of an exhaust gas purifying catalyst.

The amount of the HC adsorbent in the exhaust gas purifying catalyst 10 is not particularly limited, and may be appropriately designed in consideration of the size of the cells 12 of the base material 11, a flow rate of an exhaust gas distributed in the exhaust gas purifying catalyst 10, and the like. The amount of the HC adsorbent per 1 L of volume of the base material 11 may be, for example, 1 g/L or more, 5 g/L or more, 10 g/L or more, 15 g/L or more, or 20 g/L or more, and may be, for example, 200 g/L or less, 150 g/L or less, 100 g/L or less, 80 g/L or less, 60 g/L or less, 50 g/L or less, or 40 g/L or less.

The HC adsorption layer 20 can include a component other than the HC adsorbent as optional components. Examples of the optional components of the HC adsorption layer 20 include binders such as alumina sol and silica sol, and various additives.

As the other optional components, the HC adsorption layer 20 may include an oxygen storage capacity material (so-called OSC material) having oxygen absorbing/releasing capacity, a non-oxygen storage capacity material (so-called non-OSC material) having no oxygen absorbing/releasing capacity. Examples of the OSC material and the non-OSC material are similar to those of an OSC material and a non-OSC material included in the catalyst layer 30 described later.

The contents of the OSC material and the non-OSC material included in the HC adsorption layer 20 are not particularly limited. As the amount of the HC adsorbent in the HC adsorption layer 20 increases, a larger amount of HC can be adsorbed. Thus, the content of each of the OSC material and the non-OSC material in the HC adsorption layer 20 is preferably 40 mass% or less, more preferably 20 mass% or less.

On the other hand, the HC adsorption layer 20 does not include a catalytic metal in general.

In one preferred embodiment, the HC adsorption layer 20 consists only of an ALPO molecular sieve having a 12-numbered ring and a binder component.

On the base material 11, a single HC adsorption layer 20 is basically provided. That is, the number of the HC adsorption layers 20 provided on the base material 11 is basically one. By using the single HC adsorption layer 20 and allowing the ALPO molecular sieve having a 12-numbered ring to be included from one end 20a to the other end 20b of the HC adsorption layer 20, HC purification performance at cold start after hydrothermal endurance is significantly enhanced. Alternatively, another HC adsorption layer may be provided within a range that does not inhibit the effects of the present invention (in particular, a length of 10% or less of the length of the HC adsorption layer 20 in the cylinder axis directions X).

A portion of the HC adsorption layer 20 may have a composition different from that of another portion of the HC adsorption layer 20. For example, an upstream X1 portion (front portion) and a downstream X2 portion (rear portion) of the HC adsorption layer 20 in the cylinder axis directions X may have different compositions. Specifically, for example, the upstream X1 portion (front portion) and the downstream X2 portion (rear portion) of the HC adsorption layer 20 in the cylinder axis directions X may have ALPO molecular sieves having a 12-numbered ring with different framework structures.

Therefore, in the present specification, in a case where two regions including the HC adsorbent and having two different compositions are in contact with each other, these regions are regarded as a single HC adsorption layer 20.

The coating amount (i.e., formation amount) of the HC adsorption layer 20 is not particularly limited. This coating amount is, for example, 3 to 200 g/L and may be 10 to 100 g/L per 1 L of volume of a portion of the base material in which the HC adsorption layer 20 is formed along the cylinder axis directions X. When the range described above is satisfied, both of enhancement of purification performance of harmful components and reduction of a pressure loss can be achieved at high level. In addition, durability and resistance to peeling can be enhanced.

The thickness of the HC adsorption layer 20 is not particularly limited, and may be appropriately designed in consideration of durability, resistance to peeling, and the like. The thickness of the HC adsorption layer 20 is, for example, 1 to 100 µm and may be 5 to 100 µm.

The coating width (average length) of the HC adsorption layer 20 in the cylinder axis directions X is not particularly limited. Since HC purification performance increases as the coating width increases, the coating width is, for example, 20% or more, preferably 50% or more, more preferably 80% or more, even more preferably 90% or more of the overall length L of the base material 11, and may be equal to the overall length L of the base material 11.

The catalyst layer 30 is a reaction field for purifying harmful components in an exhaust gas. The catalyst layer 30 is a porous body having a large number of pores (voids). An exhaust gas that has flowed into the exhaust gas purifying catalyst 10 is brought into contact with the catalyst layer 30 while flowing in channels (cells 12) in the exhaust gas purifying catalyst 10. Accordingly, harmful components in the exhaust gas are purified. For example, HC and CO included in the exhaust gas are oxidized by the catalyst layer 30 and converted (purified) to, for example, water and carbon dioxide. For example, NOx included in the exhaust gas is reduced by the catalyst layer 30 and converted (purified) to nitrogen.

The catalyst layer 30 includes at least a catalytic metal as an essential component. As the catalytic metal, various metal species that can function as oxidation catalysts or reduction catalysts in purification of harmful components may be used. Typical examples of the catalytic metal include a platinum group, that is, rhodium (Rh), palladium (Pd), platinum (Pt), ruthenium (Ru), osmium (Os), and iridium (Ir). Instead of, or in addition to, the platinum group, other metal species may be used. For example, metal species such as iron (Fe), cobalt (Co), nickel (Ni), copper (Cu), silver (Ag), and gold (Au) may be used. Alternatively, an alloy of two or more of these metals may be used. As the catalytic metal, an oxidation catalyst (e.g., at least one of Pd and Pt) having high oxidation activity and reduction catalyst (e.g., Rh) having high reduction activity are preferable, and a combination of two or more types of these catalysts is especially preferable. The oxidation catalyst and the reduction catalyst may be present in the same (single) catalyst layer or in separate catalyst layers.

The catalytic metal is preferably used as fine particles having a sufficiently small particle size from the viewpoint of increasing a contact area with an exhaust gas. An average particle size of the catalytic metal (specifically, an average of sizes of 50 or more particles of a catalytic metal obtained by transmission electron microscope (TEM) observation) is approximately 1 to 15 nm, for example, 10 nm or less, preferably 5 nm or less.

The amount of the catalytic metal in the exhaust gas purifying catalyst 10 is not particularly limited, and may be appropriately determined depending on the type of the catalytic metal, and the like. From the viewpoint of especially high exhaust gas purification performance, the amount of the catalytic metal per 1 L of volume of the base material 11 may be, for example, 0.01 g/L or more, 0.03 g/L or more, 0.05 g/L or more, 0.08 g/L or more, or 0.10 g/L or more. From the viewpoint of balance between exhaust gas purification performance and cost, the amount may be, for example, 15.00 g/L or less, 10.00 g/L or less, 5.00 g/L or less, 3.00 g/L or less, 1.50 g/L or less, 1.00 g/L or less, 0.80 g/L or less, or 0.50 g/L or less.

It should be noted that the expression "per 1 L of volume of the base material" refers to per 1 L of total bulk volume including a net volume of the base material and a volume of a cell passage. The term (g/L) in the following description refers to an amount included in 1 L of volume of the base material.

The catalytic metal is generally supported on a carrier. Thus, the catalyst layer 30 may further include a carrier that supports a catalytic metal.

As a carrier supporting the catalytic metal, a known material used as a carrier of a catalytic metal of an exhaust gas purifying catalyst can be used. The carrier is typically an inorganic porous body. Examples of the carrier include: materials having no oxygen storage capacity (non-OSC materials) such as aluminium oxide (Al₂O₃, alumina), titanium oxide (TiO₂, titania), zirconium oxide (ZrO₂, zirconia), and silicon oxide (SiO₂, silica); and materials having oxygen storage capacity (OSC materials) such as ceria (CeO₂) and composite oxides including ceria. The carrier may be any of a non-OSC material and an OSC material and may be both.

In order to enhance heat resistance and other properties, an oxide used as a non-OSC material may be supplemented with a small amount (e.g., 1 mass% or more and 10 mass% or less) of an oxide of a rare-earth element such as Pr₂O₃, Nd₂O₃, La₂O₃, or Y₂O₃. From the viewpoint of especially high heat resistance and durability, the non-OSC material is preferably Al₂O₃, more preferably Al₂O₃ compounded with La₂O₃ (La₂O₃-Al₂O₃ composite oxide: LA composite oxide).

Concerning the OSC material, examples of the composite oxide containing ceria include a composite oxide containing ceria and zirconia (ceria-zirconia composite oxide, so-called CZ composite oxide or ZC composite oxide). In a case where the OSC material contains zirconium oxide, thermal degradation of cerium oxide can be suppressed, and thus, the OSC material is preferably a ceria-zirconia composite oxide.

The OSC material may contain an oxide of a rare-earth element in order to enhance properties (especially heat resistance, oxygen storage/release property, and the like). Examples of the rare-earth element include Sc, Y, La, Pr, Nd, Pm, Sm, Eu, Gd, Tb, Dy, Ho, Er, Tm, Yb, and Lu. Preferred examples of an oxide of the rare-earth element include Pr₂O₃, Nd₂O₃, La₂O₃, and Y₂O₃.

In a case where the OSC material is a composite oxide including cerium oxide, from the viewpoint of sufficiently exhibiting oxygen storage capacity thereof, the content of cerium oxide in the composite oxide is preferably 15 mass% or more, more preferably 20 mass% or more. On the other hand, if the content of cerium oxide is excessively high, basicity of the OSC material might be excessively high. For this reason, the content of cerium oxide is preferably 40 mass% or less, and more preferably 30 mass% or less.

As an example, the catalyst layer 30 includes the OSC material and the non-OSC material, and the catalytic metal is supported on both the OSC material and the non-OSC material.

The catalyst layer 30 may further contain the OSC material and/or the non-OSC material described above in the form of supporting no catalytic metal. The OSC material and the non-OSC material used as a carrier and the OSC material and the non-OSC material used as a non-carrier preferably contain no Si.

The amount of the OSC material and the non-OSC material in the exhaust gas purifying catalyst 10 is not particularly limited, and may be appropriately designed in consideration of the size of the cells 12 of the base material 11, a flow rate of an exhaust gas distributed in the exhaust gas purifying catalyst 10, and others. The total amount of the OSC material and the non-OSC material (total amount of the OSC material and the non-OSC material including both the carrier and the non-carrier) per 1 L of volume of the base material 11 may be, for example, 50 g/L or more, 70 g/L or more, 80 g/L or more, 90 g/L or more, or 100 g/L or more, and may be, for example, 500 g/L or less, 400 g/L or less, 300 g/L or less, 250 g/L or less, 200 g/L or less, 180 g/L or less, or 160 g/L or less.

The catalyst layer 30 preferably includes an OSC material as a carrier of the catalytic metal or in a form not supporting the catalytic metal. At this time, even when the air-fuel ratio of an exhaust gas varies depending on traveling conditions of a vehicle, and the like, high purification performance can be obtained with stability.

The catalyst layer 30 may include an alkaline earth element such as calcium (Ca) or barium (Ba). The alkaline earth element can suppress poisoning of the catalytic metal (especially oxidation catalyst). In addition, the alkaline earth element enhances dispersibility of the catalytic metal to thereby reduce sintering due to grain growth of the catalytic metal. In a case where the catalyst layer 30 includes an alkaline earth element together with the OSC material, the amount of oxygen absorption into the OSC material can be further increased in a lean condition (oxygen-rich atmosphere), where the fuel is leaner than the stoichiometric air-fuel ratio. The alkaline earth element can be included in a form of an oxide, a hydroxide, a carbonate, a nitrate, a sulfate, a phosphate, an acetate, a formate, an oxalate, a halide, or the like.

The catalyst layer 30 may include an NOx adsorbent having NOx storage capacity, a stabilizer, and the like. Examples of the stabilizer include rare-earth elements such as yttrium (Y), lanthanum (La), and neodymium (Nd). It should be noted that the rare-earth element can be present in the form of an oxide in the catalyst layer 30.

Examples of the other optional components of the catalyst layer 30 include binders such as alumina sol and silica sol, and various additives. The binder preferably includes no Si, and thus, alumina sol is preferable.

The catalyst layer 30 may include an HC adsorbent, but since the exhaust gas purifying catalyst 10 according to this embodiment includes the HC adsorption layer 20, the catalyst layer 30 preferably includes no HC adsorbent.

A coating amount (molding amount) of the catalyst layer 30 may be, but is not particularly limited to, approximately 30 g/L or more, typically 50 g/L or more, preferably 70 g/L or more, for example, 100 g/L or more, and may be approximately 500 g/L or less, typically 400 g/L or less, for example, 300 g/L or less, per 1 L of volume of the exhaust gas purifying catalyst 10 (volume of the base material 11). When the coating amount satisfies the range described above, high levels of both enhancement of purification performance and reduction of a pressure loss can be obtained. It should be noted that the "coating amount" herein refers to a mass of a solid content included in a unit volume of the exhaust gas purifying catalyst 10.

The length and thickness of the catalyst layer 30 can be appropriately designed in consideration of, for example, the size of the cells 12 of the base material 11 and a flow rate of an exhaust gas distributed in the exhaust gas purifying catalyst 10. The catalyst layer 30 may be provided on the partitions 14 of the base material 11 continuously or intermittently. The catalyst layer 30 may be provided along the cylinder axis directions X from the inlet 10a of an exhaust gas or along the cylinder axis directions X from the outlet 10b of the exhaust gas, for example.

An entire coating width (average length) of the catalyst layer 30 along the cylinder axis directions X is, but not particularly limited to, approximately 20% or more, preferably 50% or more, typically 80% or more, for example, 90% or more of an overall length L of the base material 11, and may be equal to the overall length L of the base material 11. A coating thickness (average thickness) of the catalyst layer 30 is, but not particularly limited to, approximately 1 to 300 µm, typically 5 to 200 µm, and, for example, 10 to 100 µm. According to this, high levels of both enhancement of purification performance and reduction of a pressure loss can be obtained.

A portion of the catalyst layer 30 may have a composition different from that of another portion of the catalyst layer 30. For example, an upstream X1 portion (front portion) and a downstream X2 portion (rear portion) of the catalyst layer 30 in the cylinder axis directions X may have different compositions. Specifically, for example, the upstream X1 portion (front portion) and the downstream X2 portion (rear portion) of the catalyst layer 30 in the cylinder axis directions X may include different catalytic metals.

The exhaust gas purifying catalyst 10 illustrated in FIG. 3 includes only the HC adsorption layer 20 and the catalyst layer 30. Alternatively, the exhaust gas purifying catalyst 10 may further include a layer other than the layers 20 and 30. For example, the exhaust gas purifying catalyst 10 may include another layer (also referred to as an intermediate layer) between the HC adsorption layer 20 and the catalyst layer 30, or may include another layer

(also referred to as an underlying layer) between the base material 11 and the HC adsorption layer 20.

The catalyst layer 30 of the exhaust gas purifying catalyst 10 illustrated in FIG. 3 includes a single-layer structure. Alternatively, the catalyst layer 30 may have a multilayer structure in which each layer thereof contains a catalytic metal. An example of the exhaust gas purifying catalyst in the case where the catalyst layer 30 has a multilayer structure will be described below.

### <<Variation of Exhaust Gas Purifying Catalyst 10>>

FIG. 4 is a partial cross-sectional view schematically illustrating a portion of a cross section of an exhaust gas purifying catalyst 10' that is a variation of the exhaust gas purifying catalyst 10, taken along the cylinder axis directions X. The exhaust gas purifying catalyst 10' includes a base material 11, an HC adsorption layer 20 disposed on the base material 11, and a catalyst layer 30' having a multilayer structure. The HC adsorption layer 20 and the catalyst layer 30' are stacked such that the HC adsorption layer 20 is located closer to the base material 11 than the catalyst layer 30' is. Since the catalyst layer 30' has the multilayer structure, exhaust gas purification performance can be further enhanced.

The base material 11 and the HC adsorption layer 20 are the same as those described above. Unlike the example illustrated in FIG. 3, the catalyst layer 30' has the multilayer structure. Specifically, the catalyst layer 30' have a multilayer structure in which a first partial catalyst layer (lower layer) 31 and a second partial catalyst layer (upper layer) 32 are laminated in the thickness directions. Thus, the lower layer 31 is located closer to the base material 11. In the illustrated example, the lower layer 31 is disposed so as to contact the surface of the HC adsorption layer 20, and the upper layer 32 is disposed so as to contact the upper surface of the lower layer 31. In the illustrated example, the catalyst layer 30' has a double-layer structure, but the catalyst layer 30' may have a laminated structure of three or more layers. For example, the catalyst layer 30' may include an intermediate layer between the lower layer 31 and the upper layer 32, or the catalyst layer 30' may further include another layer on top of the upper layer 32.

Each of the lower layer 31 and the upper layer 32 includes a catalytic metal. Here, the lower layer 31 and the upper layer 32 may include the same catalytic metal or may include different catalytic metals, preferably include different catalytic metals.

Specifically, for example, the lower layer 31 includes an oxidation catalyst (e.g., at least one of Pd and Pt) as a catalytic metal, and the upper layer 32 includes a reduction catalyst (e.g., Rh) as a catalytic metal. In this case, the exhaust gas purifying catalyst 10' exhibits especially high exhaust gas purification performance. From the viewpoint of higher exhaust gas purification performance, it is advantageous that the catalytic metal of the lower layer 31 is Pt and the catalytic metal of the upper layer 32 is Rh. This configuration is especially advantageous for purification of paraffin. Alternatively, from the viewpoint of higher exhaust gas purification performance, it is advantageous that the catalytic metal of the lower layer 31 is Pd and the catalytic metal of the upper layer 32 is Rh. This configuration is especially advantageous for purification of olefin.

In a case where the lower layer 31 includes Pt, preferably 80 mass% or more, more preferably 90 mass% or more, even more preferably 95 mass% or more, most preferably 100 mass% of the catalytic metal included in the lower layer 31 is Pt. In a case where the lower layer 31 includes Pd, preferably 80 mass% or more, more preferably 90 mass% or more, even more preferably 95 mass% or more, most preferably 100 mass% of the catalytic metal included in the lower layer 31 is Pd. In a case where the upper layer 32 includes Rh, preferably 80 mass% or more, more preferably 90 mass% or more, even more preferably 95 mass% or more, most preferably 100 mass% of the catalytic metal included in the upper layer 32 is Rh.

Each of the lower layer 31 and the upper layer 32 may include optional components that are the same as or similar to those of the catalyst layer 30 described above.

### <<Method for Producing Exhaust Gas Purifying Catalyst 10>>

The exhaust gas purifying catalyst 10 can be produced by, for example, the following method: First, a base material 11, an HC adsorption layer slurry for forming an HC adsorption layer 20, and a catalyst layer slurry for forming a catalyst layer 30 are prepared.

The HC adsorption layer slurry can be prepared by, for example, mixing an HC adsorbent including 80 mass% or more of an ALPO molecular sieve having a 12-numbered ring and other optional components (e.g., a non-OSC material, an OSC material, a binder, various additives, etc.) in a dispersion medium. The catalyst layer slurry can be prepared by, for example, mixing a catalytic metal source (e.g., solution including a catalytic metal as ions and other optional components (e.g., a non-OSC material, an OSC material, a binder, various additives, etc.) in a dispersion medium. Examples of the dispersion medium include water and a mixture of water and a water-soluble organic solvent. Properties (e.g., viscosity, solid content, etc.) of these slurries can be appropriately determined depending on the size of the base material 11 to be used, the form of cells 12 (partitions 14), properties required for the HC adsorption layer 20 and the catalyst layer 30, and so forth.

Next, with the HC adsorption layer slurry, the HC adsorption layer 20 is formed on the base material 11. The HC adsorption layer 20 can be formed by a known method (e.g., impregnation, wash coating, etc.). Specifically, for example, the HC adsorption layer slurry is allowed to flow into the cells 12 from an end portion of the base material 11 and supplied to a predetermined length along the cylinder axis directions X. The slurry may be allowed to flow from any one of the inlet 10a or the outlet 10b. In this case, excess slurry may be sucked from the opposite end. Alternatively, the excess slurry may be discharged from the cells 12 by, for example, sending air from the opposite end.

Thereafter, the base material 11 to which the slurry has been supplied is fired at a predetermined temperature for a predetermined time. The firing method may be the same as or similar to a conventional firing method. The dispersion medium may be removed by drying before the firing. By doing these, the HC adsorption layer 20 can be formed on the base material 11.

Subsequently, with the catalyst layer slurry, the catalyst layer 30 is formed. The catalyst layer 30 can be formed by a known method (e.g., impregnation, wash coating, etc.). For example, in a manner similar to that described above, the catalyst layer slurry is allowed to flow into the cells 12 from an end portion of the base material 11 and supplied to a predetermined length along the cylinder axis directions X so that the catalyst layer slurry is applied onto the HC adsorption layer 20 formed on the base material 11.

Then, the resulting product is fired at a predetermined temperature for a predetermined time. The firing method may be the same as or similar to a conventional firing method. The dispersion medium may be removed by drying before the firing. By doing these, the catalyst layer 30 can be formed on the HC adsorption layer 20 formed on the base material 11. In the foregoing manner, the exhaust gas purifying catalyst 10 is obtained.

### <<Application of Exhaust Gas Purifying Catalyst 10>>

The exhaust gas purifying catalyst 10 can be used suitably for purifying the exhaust gas emitted from the internal-combustion engines of, in addition to vehicles such as an automobile and a truck, a motorcycle, and a bicycle with a motor; marine products such as a vessel, a tanker, a water bike, a personal watercraft, and an outboard motor; garden products such as a mowing machine, a chain saw, and a trimmer; leisure products such as a golf cart and a four-wheeled buggy; generator sets such as a cogeneration system; an incinerator, and the like. Among these, the catalyst 10 is suitably applicable to vehicles such as automobiles, and particularly suitably applicable to vehicles including gasoline engines.

Test examples of the present invention will be described below, but are not intended to limit the present invention.

### [Example 1]

As a base material, a honeycomb base material (made of cordierite, volume: 0.0175 L, overall length of base material: 24 mm, the number of cells: 400 cells, cell shape: quadrangle, partition thickness: 6 mil) was prepared. As an HC adsorbent, AFI type ALPO-5 (maximum ring member number: 12) was prepared. As materials for a catalyst layer, the following materials were prepared.
Non-OSC material: Al₂O₃ doped with La₂O₃, La₂O₃ content: 1 to 10 mass%
OSC material: CeO₂-ZrO₂-based composite oxide, CeO₂ content: 15 to 40 mass%, supplemented with minute amounts of Pr₂O₃, Nd₂O₃, La₂O₃, and Y₂O₃ and processed to have high heat resistance

The HC adsorbent (i.e., AFI type ALPO-5), an Al₂O₃-based binder, and a water medium were mixed, thereby preparing an HC adsorption layer slurry. This slurry was poured into the base material, and an unnecessary portion was blown out by a blower, thereby coating a surface of the base material with a material for forming an HC adsorption layer. The resulting product was placed in a ventilation drier set at 120°C for two hours to remove water, and then fired in an electric furnace at 500°C for one hour. In this manner, an HC adsorption layer was formed on the base material.

A nitric acid-type Pt aqueous solution, the La₂O₃-compounded Al₂O₃ described above, the CeO₂-ZrO₂-based composite oxide described above, barium sulfate, an Al₂O₃-based binder, and a water medium were mixed, thereby preparing a lower catalyst layer slurry. This slurry was poured into the base material on which the HC adsorption layer is formed, and an unnecessary portion was blown out by a blower, thereby coating the HC adsorption layer with a material for forming a lower catalyst. The resulting product was placed in a ventilation drier set at 120°C for two hours to remove water, and then fired in an electric furnace at 500°C for one hour. In this manner, a lower catalyst layer including a Pt catalyst was formed on the base material.

Next, rhodium nitrate aqueous solution, the La₂O₃-compounded Al₂O₃ described above, the CeO₂-ZrO₂-based composite oxide described above, an Al₂O₃-based binder, and a water medium were mixed, thereby preparing an upper catalyst layer slurry. This slurry was poured into the base material on which the lower catalyst layer is formed and an unnecessary portion was blown out by a blower, thereby coating a surface of the lower catalyst layer with a material for forming an upper catalyst layer. The resulting product was placed in a ventilation drier set at 120°C for two hours to remove water, and then fired in an electric furnace at 500°C for one hour. In this manner, an upper catalyst layer including a Rh catalyst was formed on the lower catalyst layer, thereby obtaining an exhaust gas purifying catalyst of Example 1. In the obtained exhaust gas purifying catalyst, a Pt content per 1 L of volume of the base material was 0.3 g/L, a Rh content was 0.06 g/L, a content of carriers (non-OSC material + OSC material) was 150 g/L, and a content of an HC adsorbent was 116 g/L.

### [Example 2]

An exhaust gas purifying catalyst of Example 2 was produced in the same manner as Example 1 except for using a mixture of AFI type ALPO-5 and BEA-type zeolite (SiO₂/Al₂O₃ ratio = 500) at a mass ratio of 95:5, as an HC adsorbent

### [Example 3]

An exhaust gas purifying catalyst of Example 3 was produced in the same manner as Example 1 except for using a mixture of AFI type ALPO-5 and BEA-type zeolite (SiO₂/Al₂O₃ ratio = 500) at a mass ratio of 90:10, as an HC adsorbent.

### [Comparative Example 1]

An exhaust gas purifying catalyst of Comparative Example 1 was produced in the same manner as Example 1 except for forming no HC adsorption layer without using an HC adsorption layer slurry.

### [Comparative Example 2]

An exhaust gas purifying catalyst of Comparative Example 2 was produced in the same manner as Example 1 except for using aluminium phosphate instead of AFI type ALPO-5.

### [Comparative Example 3]

An exhaust gas purifying catalyst of Comparative Example 3 was produced in the same manner as Example 1 except for using ERI type ALPO-17 (maximum ring member number: 8) instead of AFI type ALPO-5.

### [Comparative Example 4]

An exhaust gas purifying catalyst of Comparative Example 4 was produced in the same manner as Example 1 except for using BEA-type zeolite (maximum ring member number: 12, SiO₂/Al₂O₃ ratio = 500) instead of AFI type ALPO-5.

### [Example 4]

A nitric acid-type Pd aqueous solution, the La₂O₃-compounded Al₂O₃ described above, the CeO₂-ZrO₂-based composite oxide described above, barium sulfate, an Al₂O₃-based binder, and a water medium were mixed, thereby preparing a lower catalyst layer slurry. An exhaust gas purifying catalyst of Example 4 was produced in the same manner as Example 1 except for forming a lower catalyst layer including a Pd catalyst using this lower catalyst layer slurry.

### [Comparative Example 5]

An exhaust gas purifying catalyst of Comparative Example 5 was produced in the same manner as Example 1 except for forming an HC adsorption layer by using BEA-type zeolite (maximum ring member number: 12, SiO₂/Al₂O₃ ratio = 500) instead of AFI type ALPO-5 and forming a lower catalyst layer including a Pd catalyst by using the lower catalyst layer slurry produced in Example 4.

### [Hydrothermal Endurance Treatment]

To the exhaust gas purifying catalysts of the examples and the comparative examples, a rich gas and a lean gas were alternately distributed at 900°C for 10 hours while switching the gas every 10 minutes. The composition of the rich gas was CO: 5%, water: 10%, and N₂: balance, and the composition of the lean gas was O₂: 2.5%, water: 10%, and N₂: balance.

### [Catalyst Activity Evaluation on HC]

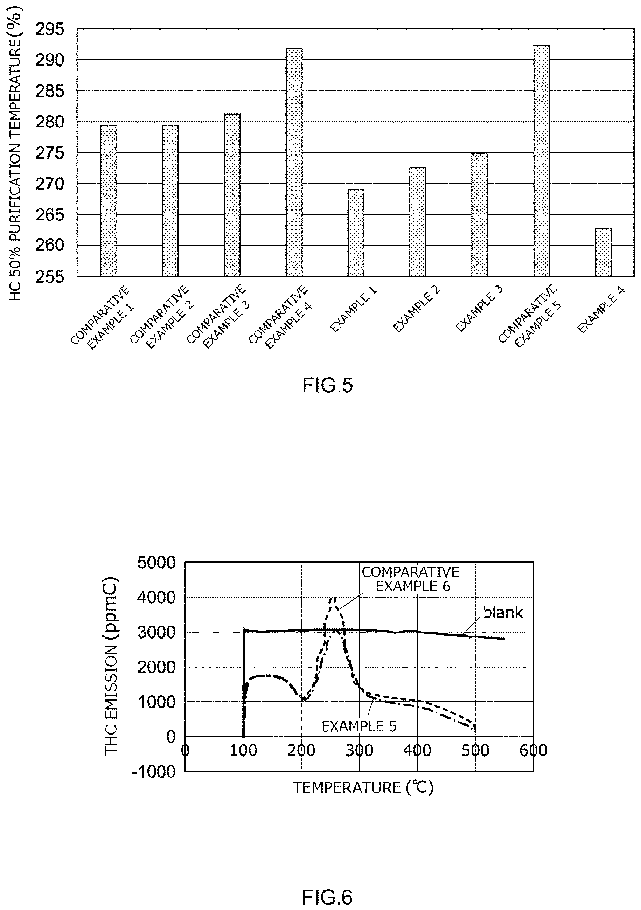

While a pretreatment gas A was distributed to the exhaust gas purifying catalysts of the examples and the comparative examples subjected to the hydrothermal endurance treatment described above, the temperature was raised from 100°C to 500°C at 20°C/min. and the catalysts were held at 500°C for five minutes. Next, the temperature was lowered to 100°C while an inert gas (N₂ gas) was distributed. After the temperature was stabilized, the temperature was raised to 550°C at 50°C/min. while a reactant gas A was distributed, thereby determining a temperature at which an HC purification efficiency of the reactant gas reached 50% (HC 50% purification temperature: T50). It should be noted that as the pretreatment gas A and the reactant gas A, the following gasses were used. FIG. 5 shows a graph of HC 50% purification temperatures of the examples and the comparative examples.

### Pretreatment gas A

A/F ratio: 14.6
C₃H₆: 2400 ppmC, C₃H₈: 600 ppmC, CO: 0.5%
NO: 800 ppm, H₂O: 10%, CO₂: 10%, O₂: 0.6%, N₂: balance

### Reactant gas A

A/F ratio: 14.5
C₃H₆: 1500 ppmC, C₁₀H₂₂: 1500 ppmC, H₂O: 3%
CO₂: 10%, O₂: 0.3%, N₂: balance

From the graph of FIG. 5, it can be understood that in the exhaust gas purifying catalysts of Examples 1 through 4 using an aluminophosphate molecular sieve having a 12-numbered ring as an HC adsorbent of an HC adsorption layer, HC 50% purification temperatures are significantly lower than those of the exhaust gas purifying catalysts of Comparative Examples 1 through 5. That is, it can be understood that the exhaust gas purifying catalysts of Examples 1 through 4 using an aluminophosphate molecular sieve having a 12-numbered ring exhibit significantly high HC purification performance at cold start even after hydrothermal endurance. These results demonstrate that according to the exhaust gas purifying catalyst disclosed here, high HC purification performance at cold start after hydrothermal endurance can be obtained.

### [Catalyst Activity Evaluation on NH₃]

While the pretreatment gas A described above was distributed to the exhaust gas purifying catalysts of Example 1 and Comparative Examples 1, 2, and 4 subjected to the hydrothermal endurance treatment, the temperature was raised from 100°C to 500°C at 20°C/min. and the catalysts were held at 500°C for five minutes. Next, the temperature was lowered to 100°C while an inert gas (N₂ gas) was distributed. After the temperature was stabilized, the temperature was raised to 650°C at 50°C/min. while a reactant gas B was distributed, thereby determining a temperature at which a NH₃ purification efficiency of the reactant gas reached 50% (NH₃ 50% purification temperature: T50). As the reactant gas B, the following gas was used.

### Reactant gas B

### NH₃: 500 ppm, H₂O: 3%, CO₂: 10%, O₂: 0.3%, N₂: balance

The exhaust gas purifying catalyst of Example 1 showed lower NH₃ 50% purification temperature than those of the exhaust gas purifying catalysts of Comparative Examples 1, 2, and 4.

### [Comparative Example 6]

As a base material, a honeycomb base material (made of cordierite, volume: 0.0175 L, overall length of base material: 12.5 mm, the number of cells: 400 cells, cell shape: quadrangle, partition thickness: 6 mil) was prepared. As an HC adsorbent, AFI type ALPO-5 (maximum ring member number: 12) was prepared. As materials for a catalyst layer, the following materials were prepared.

### Non-OSC material: Al₂O₃

OSC material: a CeO₂-ZrO₂-based composite oxide with a CeO₂ content: 15 to 40 mass% supplemented with minute amounts of Pr₂O₃, Nd₂O₃, and La₂O₃, and processed to have high heat resistance.

The HC adsorbent (i.e., AFI type ALPO-5), a binder, and a water medium were mixed, thereby preparing an HC adsorption layer slurry. This slurry was applied from the upstream end of the base material to a portion at 50% of the base material length by wash coating, thereby coating the surface of a front portion of the base material with a material for forming an HC adsorption layer. The resulting product was placed in a ventilation drier set at 120°C for two hours to remove water, and then fired in an electric furnace at 500°C for one hour. In this manner, an HC adsorption layer including AFI type ALPO-5 was formed on the front portion of the base material.

A nitric acid-type Pd aqueous solution, a nitric acid-type Rh aqueous solution, the Al₂O₃ described above, the CeO₂-ZrO₂-based composite oxide described above, a binder, and a water medium were mixed, thereby preparing a catalyst layer slurry. This slurry was applied from the upstream end of the base material to a portion at 50% of the base material length by wash coating, thereby coating the HC adsorption layer in the front portion with a material for forming a catalyst. The resulting product was placed in a ventilation drier set at 120°C for two hours to remove water, and then fired in an electric furnace at 500°C for one hour. In this manner, a catalyst layer including a catalytic metal on the HC adsorption layer was formed on the front portion of the base material.

An HC adsorbent (i.e., ZSM-5), a binder, and a water medium were mixed, thereby preparing an HC adsorption layer slurry. This slurry was applied from the downstream end of the base material to a portion at 50% of the base material length by wash coating, thereby coating the surface of a rear portion of the base material with a material for forming an HC adsorption layer. The resulting product was placed in a ventilation drier set at 120°C for two hours to remove water, and then fired in an electric furnace at 500°C for one hour. In this manner, an HC adsorption layer including ZSM-5 was formed on the rear portion of the base material.

Then, a nitric acid-type Pd aqueous solution, a nitric acid- type Rh aqueous solution, the Al₂O₃ described above, the CeO₂-ZrO₂-based composite oxide described above, a binder, and a water medium were mixed, thereby preparing a catalyst layer slurry. This slurry was applied from the downstream end of the base material to a portion at 50% of the base material length by wash coating, thereby coating the HC adsorption layer in the rear portion with a material for forming a catalyst layer. The resulting product was placed in a ventilation drier set at 120°C for two hours to remove water, and then fired in an electric furnace at 500°C for one hour. In this manner, a catalyst layer including a catalytic metal on the HC adsorption layer was also formed on the rear portion of the base material. In this manner, an exhaust gas purifying catalyst of Comparative Example 6 was obtained. In the obtained exhaust gas purifying catalyst (front portion and rear portion), a Pd content per 1 L of volume of the base material was 8 g/L, a Rh content was 0.7 g/L, a content of carriers (non-OSC material + OSC material) was 417 g/L, and a content of an HC adsorbent was 116 g/L.

### [Example 5]

An HC adsorbent (i.e., AFI type ALPO-5), a binder, and a water medium were mixed, thereby preparing an HC adsorption layer slurry. This slurry was applied from the upstream end to the downstream end of the same base material as that used in Comparative Example 6, thereby coating the surface of the base material with a material for forming an HC adsorption layer over 100% of the length of the base material. The resulting product was placed in a ventilation drier set at 120°C for two hours to remove water, and then fired in an electric furnace at 500°C for one hour. In this manner, an HC adsorption layer including AFI type ALPO-5 was formed on the base material.

Thereafter, in the same manner as Comparative Example 6, a catalyst layer was formed on the HC adsorption layer, thereby obtaining an exhaust gas purifying catalyst of Example 5.

### [Hydrothermal Endurance Treatment and Catalyst Activity Evaluation on HC]

A hydrothermal endurance treatment was conducted on the exhaust gas purifying catalysts of Example 5 and Comparative Example 6 in the same manner as that described above. Thereafter, while the pretreatment gas A described above was distributed thereto, the temperature was raised from 100°C to 500°C at 20°C/min. and was kept at 500°C for five minutes. Next, the temperature was lowered to 100°C while an inert gas (N₂ gas) was distributed. After the temperature was stabilized, the temperature was raised to 500°C at 50°C/min. while the reactant gas A was distributed, and a profile of an HC emission amount at this time was obtained. FIG. 6 shows results.

In FIG. 6, blank shows an HC emission amount in the absence of an exhaust gas purifying catalyst. Example 5 and Comparative Example 6 show a significant difference especially in the temperature range from 230°C to 280°C. This result demonstrates that when HC is emitted from the HC adsorption layer of the exhaust gas purifying catalyst, the HC concentration in an exhaust gas temporarily becomes higher than 3000 ppmC, but the exhaust gas purifying catalyst of Example 5 shows particularly higher HC purification performance at this time than the exhaust gas purifying catalyst of Comparative Example 6.

Some embodiments of the present invention have been described in the above, but the embodiments are merely examples. The present invention can be carried out in other various modes. The present invention can be carried out on the basis of the contents disclosed in the description and common general knowledge in the field. The techniques described in claims include various modifications and changes of the above exemplified embodiments. For example, the embodiments described above may be partially replaced with another embodiment, and another modified embodiment may be added to the embodiments described above. It may also be removed as appropriate if the technical features of the embodiments are not described as essential.

## Claims

1. An exhaust gas purifying catalyst comprising:
a base material;
a hydrocarbon adsorption layer; and
a catalyst layer, wherein
the hydrocarbon adsorption layer and the catalyst layer are stacked such that the hydrocarbon adsorption layer is located closer to the base material than the catalyst layer is,
the catalyst layer contains a catalytic metal,
the hydrocarbon adsorption layer includes a molecular sieve containing substantially no Si from one end to another end of the hydrocarbon adsorption layer along a flow direction of an exhaust gas,
a content of the molecular sieve containing substantially no Si in the hydrocarbon adsorption layer is 80 mass% or more, and
the molecular sieve containing substantially no Si is an aluminophosphate molecular sieve having a 12-numbered ring.

2. The exhaust gas purifying catalyst according to claim 1, wherein the hydrocarbon adsorbent includes 90 mass% or more of the molecular sieve containing substantially no Si.

3. The exhaust gas purifying catalyst according to claim 1, wherein a framework structure of the aluminophosphate molecular sieve is AFI type.

4. The exhaust gas purifying catalyst according to claim 1, wherein a coating width of the hydrocarbon adsorption layer along the flow direction of the exhaust gas is 80% or more of an overall length of the base material.

5. The exhaust gas purifying catalyst according to claim 1, wherein
a first partial catalyst layer and a second partial catalyst layer are stacked in the catalyst layer,
the first partial catalyst layer is located closer to the base material than the second partial catalyst layer is,
each of the first partial catalyst layer and the second partial catalyst layer contains the catalytic metal,
the first partial catalyst layer includes an oxidation catalyst as the catalytic metal, and the second partial catalyst layer includes a reduction catalyst as the catalytic metal.
